# EUROPÄISCHE PATENTSCHRIFT

(11) **EP 4 161 241 B1**
(45) Veröffentlichungstag und Bekanntmachung des Hinweises auf die Patenterteilung: **18.12.2024**
(21) Anmeldenummer: 21729258.0
(22) Anmeldetag: 25.05.2021
(51) Int. Cl.: G05D 1/00

(54) **LANDWIRTSCHAFTLICHES ANBAUGERÄT ZUR BEARBEITUNG VON REIHENKULTUREN**
AGRICULTURAL IMPLEMENT FOR THE CULTIVATION OF ROW CROPS
OUTIL AGRICOLE POUR LA CULTURE EN LIGNE

(30) Priorität: 05.06.2020 DE 102020114957
(43) Veröffentlichungstag der Anmeldung: 12.04.2023
(73) Patentinhaber: Amazonen-Werke H. Dreyer SE & Co. KG, 49205 Hasbergen (DE)
(72) Erfinder: RESCH, Rainer, 49170 Hagen a TW (DE); MAHLER, Tom, 04249 Leipzig (DE)
(74) Vertreter: Grünecker Patent- und Rechtsanwälte PartG mbB
(86) Internationale Anmeldenummer: PCT/EP2021/063780
(87) Internationale Veröffentlichungsnummer: WO 2021/244886

(56) Entgegenhaltungen:
- EP-A1- 3 482 632
- CA-A1- 3 010 410
- DE-A1- 102017 130 694
- DE-B3- 102017 110 653

## Beschreibung

Die Erfindung betrifft ein landwirtschaftliches Anbaugerät zur Bearbeitung von Reihenkulturen nach dem Oberbegriff des Patentanspruchs 1, einen landwirtschaftlichen Maschinenverbund nach dem Oberbegriff des Patentanspruchs 11 und ein Verfahren zum Bearbeiten von Reihenkulturen nach dem Oberbegriff des Patentanspruchs 12.

Zur Verbesserung des Ergebnisses bei der Bearbeitung einer landwirtschaftlichen Nutzfläche werden bei verschiedenen Bearbeitungsvorgängen Pflanzenreihen auf der landwirtschaftlichen Nutzfläche erfasst. Hierzu werden Reihenerfassungseinrichtungen eingesetzt, welche beispielsweise Bestandteil von landwirtschaftlichen Anbaugeräten sein können. Auf Grundlage der Reihenerkennung kann dann eine Korrekturbewegung am Anbaugerät umgesetzt werden, wenn das Anbaugerät nicht optimal zu den Pflanzenreichen positioniert oder ausgerichtet ist.

Die Korrekturbewegung am Anbaugerät kann beispielsweise über einen Verschieberahmen realisiert werden, welcher die Einstellung der Relativposition zwischen dem Anbaugerät und einem Antriebsfahrzeug, an welchem das Anbaugerät angebaut ist, erlaubt. Das Dokument DE 10 2017 110 653 B3 offenbart einen derartigen Rahmen mit Verdreh- und Verschiebefunktion.

Ohne eine technische Reihenerfassung ist eine Korrektur der Position und Ausrichtung des Anbaugeräts relativ zu den Pflanzenreihen bisher nur über einen manuellen Lenkeingriff am Traktor oder am Anbaugerät möglich. Beim Lenkeingriff am Traktor kommt es zur Änderung der Fahrtrichtung des gesamten Maschinenverbundes. Zur Vornahme eines Lenkeingriffs am Anbaugerät wird beispielsweise bei Hackgeräten ein sogenannter Sitzträger eingesetzt, welcher auf dem Hackgerät montiert ist und auf welchem eine Person während eines Bearbeitungsvorgangs sitzen kann. Die Person nimmt während des Bearbeitungsvorgangs manuelle Verstellungen an einem Verschieberahmen vor, um die Position des Hackgeräts und deren Hackwerkzeuge relativ zu den Pflanzenreihen einzustellen. Die manuelle Vornahme derartiger Korrekturen ist, unabhängig davon, ob diese an dem Traktor oder dem Anbaugerät vorgenommen werden, anstrengend und erlaubt nur vergleichsweise niedrige Arbeitsgeschwindigkeiten.

Die im Stand der Technik vorgeschlagenen Maßnahmen zur Verbesserung des Ergebnisses bei der Bearbeitung von Reihenkulturen sind entweder äußerst aufwendig und somit nur bedingt praxistauglich oder führen lediglich zu einer geringfügigen Verbesserung des Bearbeitungsergebnisses. Aus der Druckschrift WO 2019/148220 A1 ist beispielsweise ein Hackgerät mit verstellbarer Arbeitsbreite bekannt. Die Druckschrift DE 10 2016 212 201 A1 schlägt die Ausrichtung eines Anbaugeräts über eine Unterlenkerverstellung am Traktor vor.

In der Druckschrift DE 10 2017 130 694 A1 wird eine Arbeitsmaschine mit einer eigenen Lenkeinrichtung offenbart. In der Druckschrift DE 43 01 029 A1 wird nach erfolgter Seitenverstellung des Anbaugeräts der Lenkausschlag der Schleppervorderräder entsprechend geändert.

Die der Erfindung zugrundeliegende Aufgabe besteht somit darin, die Bearbeitungsergebnisse bei der Bearbeitung von Reihenkulturen mittels eines landwirtschaftlichen Anbaugeräts weiter zu verbessern, ohne dabei den für die Bearbeitung erforderlichen Aufwand zu erhöhen.

Die Aufgabe wird gelöst durch ein landwirtschaftliches Anbaugerät der eingangs genannten Art, wobei das erfindungsgemäße Anbaugerät eine Signalerzeugungseinrichtung umfasst, welche dazu eingerichtet ist, in Abhängigkeit der durch die Reihenerfassungseinrichtung erfassten Positionen und/oder Verläufe von Pflanzenreihen Lenkbefehle für ein Antriebsfahrzeug zu erzeugen, an welchem das Anbaugerät angebaut ist.

Über die Lenkbefehlerzeugung kann erreicht werden, dass sich das Anbaugerät in beabsichtigter Weise zu den Pflanzenreihen positioniert und die Pflanzenreihen in beabsichtigter Weise abfährt. Über die Lenkbefehle erfolgt letztendlich ein von dem Anbaugerät veranlasster Lenkeingriff am Antriebsfahrzeug. Auf Grundlage der Lenkbefehlerzeugung kann auch eine Kurvenfahrt des Maschinenverbundes aus Antriebsfahrzeug und Anbaugerät veranlasst werden, wenn die Pflanzenreihen innerhalb eines Teilabschnitts der landwirtschaftlichen Nutzfläche jeweils einem gebogenen Reihenpfad folgen. Durch die Veranlassung des Lenkeingriffs des Anbaugeräts am Antriebsfahrzeug ergibt sich eine erhebliche Entlastung des Fahrers des Antriebsfahrzeugs und eine gesteigerte Präzision bei der reihenbezogenen Bearbeitung einer Reihenkultur. Es können außerdem erhebliche Kosteneinsparungen am Anbaugerät umgesetzt werden, da eine Verschiebeeinrichtung, etwa ein Verschieberahmen, am Anbaugerät zur Ausrichtung des Anbaugeräts während der Bearbeitung nicht zwingend erforderlich ist und somit entfallen kann. Insbesondere bei der Kurvenfahrt bietet ein Verschieberahmen jedoch noch ergänzende Vorteile, da über den Verschieberahmen bei der Kurvenfahrt beispielsweise eine präzise Positionierung des Anbaugeräts unter Berücksichtigung des Kurvenradius, des Wendekreises des Antriebsfahrzeugs und der Abmessungen des Anbaugeräts in Längs- und Querrichtung erfolgen kann. Ferner wird das Antriebsfahrzeug fremdgelenkt, sodass das Antriebsfahrzeug nicht zwangsläufig über eine eigene Lenkautomatik verfügen muss, um eine automatisierte oder teilautomatisierte Bearbeitung realisieren zu können. Das Anbaugerät ist vorzugsweise dazu eingerichtet, gemeinsam mit einem Antriebsfahrzeug, an welches das Anbaugerät angebaut ist, ein Tractor-Implement-Management (TIM) System zu bilden.

Die Signalerzeugungseinrichtung umfasst vorzugsweise eine Datenverarbeitungseinrichtung, welche dazu eingerichtet ist, Daten, welche von der Reihenerfassungseinrichtung bereitgestellt werden, auszuwerten und auf Grundlage der Datenauswertung geeignete Lenkeingriffe an dem Antriebsfahrzeug zu berechnen. Das Antriebsfahrzeug kann beispielsweise ein Traktor sein, welches das Anbaugerät trägt oder zieht. Das Anbaugerät kann dazu eingerichtet sein, an der Front und/oder dem Heck des Antriebsfahrzeugs angebaut zu werden. Die berechneten Lenkeingriffe berücksichtigen vorzugweise die Anbauposition des Anbaugeräts, sodass sowohl ein an der Front des Antriebsfahrzeugs angebautes Anbaugerät als auch ein an dem Heck des Antriebsfahrzeugs angebautes Anbaugerät präzise entlang der Pflanzenreihen geführt werden kann.

Die Signalerzeugungseinrichtung kann dazu eingerichtet sein, die Lenkbefehle für das Antriebsfahrzeug auch in Abhängigkeit von Abmessungen und/oder Geometrien des Antriebsfahrzeugs und/oder des Anbaugeräts zu erzeugen. Bei der Lenkbefehlerzeugung können beispielsweise der Radstand, der Wendekreis und/oder die bauliche Länge des Antriebsfahrzeugs und/oder die Abstände von Bodenbearbeitungswerkzeugen oder Ausbringelementen des Anbaugeräts zu den Achsen des Antriebsfahrzeugs berücksichtigt werden. Ferner kann die Signalerzeugungseinrichtung dazu eingerichtet sein, die Lenkbefehle für das Antriebsfahrzeug auch in Abhängigkeit von Reifenpositionen, Nachlaufeigenschaften und/oder Schwenkeigenschaften des Anbaugeräts zu erzeugen. Bei der Lenkbefehlerzeugung kann auch die Position einer Kamera und/oder die Position eines Sensors der Reihenerfassungseinrichtung berücksichtigt werden. In diesem Zusammenhang wird vorzugsweise der Längs- und/oder Querabstand der Kamera oder des Sensors zur Mitte des Antriebsfahrzeugs berücksichtigt. Entsprechende Daten können zur Lenksignalerzeugung erforderlich sein, damit beim Lenken des Antriebsfahrzeugs der Drehpunkt des Anbaugeräts berücksichtigt werden kann.

Wenn das Anbaugerät einen Verschieberahmen aufweist oder mit einem Verschieberahmen gekoppelt ist, kann dieser Verschieberahmen auch in Abhängigkeit der Signale der Reihenerfassungseinrichtung gesteuert werden. Vorzugsweise weist der Verschieberahmen eine automatische Verstelleinrichtung auf, welche die Signale der Reihenerfassungseinrichtung verwendet. Unter Berücksichtigung des Verlaufs und/oder der Positionen der Pflanzenreihen kann dann die Relativposition zwischen dem Verschieberahmen und dem Antriebsfahrzeug stets optimal eingestellt werden. Ein Verschieberahmen erlaubt somit bei einer Kurvenfahrt eine Positionierung der Bodenbearbeitungswerkzeuge oder der Ausbringelemente des Anbaugeräts, welche den Kurvenradius, den Wendekreis des Antriebfahrzeugs und die Abmessungen des Anbaugeräts in Längs- und Querrichtung berücksichtigt.

In einer bevorzugten Ausführungsform weist das erfindungsgemäße landwirtschaftliche Anbaugerät eine Kommunikationseinrichtung auf, welche dazu eingerichtet ist, bidirektional Daten mit einer Steuerungseinheit des Antriebsfahrzeugs auszutauschen. Die von der Signalerzeugungseinrichtung erzeugten Lenkbefehle für das Antriebsfahrzeug sind über die Kommunikationseinrichtung an das Antriebsfahrzeug übermittelbar. Der Datenaustausch zwischen der Kommunikationseinrichtung des Anbaugeräts und der Steuerungseinheit des Antriebsfahrzeugs kann kabelgebunden oder kabellos erfolgen. Für die Kommunikation zwischen der Kommunikationseinrichtung des Anbaugeräts und der Steuerungseinheit des Antriebsfahrzeugs kann ein Bussystem des Antriebsfahrzeugs genutzt werden, wobei die erzeugten Lenkbefehle in diesem Fall beispielsweise als Busnachrichten an die Steuerungseinheit des Antriebsfahrzeugs übermittelt werden.

In einer weiteren bevorzugten Ausführungsform weist das erfindungsgemäße landwirtschaftliche Anbaugerät mehrere quer zur Fahrtrichtung voneinander beabstandete Bodenbearbeitungswerkzeuge auf. Die Signalerzeugungseinrichtung ist vorzugsweise dazu eingerichtet, die Lenkbefehle für das Antriebsfahrzeug zur Korrektur von Relativpositionen zwischen Pflanzenreihen und Bodenbearbeitungswerkzeugen zu erzeugen. Das Anbaugerät kann beispielsweise eine Hacke sein. Die Bodenbearbeitungswerkzeuge können beispielsweise Hackwerkzeuge sein. Abweichungen zwischen den Soll-Positionen und den Ist-Positionen der Bodenbearbeitungswerkzeuge werden über die Lenkung des Antriebsfahrzeugs, welche durch die erzeugten Lenkbefehle veranlasst werden, ausgeglichen.

In einer anderen bevorzugten Ausführungsform weist das erfindungsgemäße landwirtschaftliche Anbaugerät mehrere quer zur Fahrtrichtung voneinander beabstandete Ausbringelemente auf, wobei die Signalerzeugungseinrichtung dazu eingerichtet ist, die Lenkbefehle für das Antriebsfahrzeug zur Korrektur von Relativpositionen zwischen Pflanzenreihen und Ausbringelementen zu erzeugen. Das Anbaugerät kann beispielsweise eine Pflanzenschutzspritze sein. Die Ausbringelemente können Spritzdüsen sein. Die Spritzdüsen einer Pflanzenschutzspritze sind üblicherweise oberhalb der Pflanzenreihen angeordnet. Über die ausgebrachte Spritzflüssigkeit soll häufig nur ein Pflanzenband und nicht der gesamte Pflanzenbestand behandelt werden, sodass eine exakte Positionierung der Spritzdüsen relativ zu den Pflanzenreihen erforderlich ist. Abweichungen zwischen den Soll-Positionen und den Ist-Positionen der Ausbringelemente werden über die Lenkung des Antriebsfahrzeugs ausgeglichen. Das Anbaugerät kann auch eine lenkbare Achse aufweisen, sodass Abweichungen zwischen den Soll-Positionen und den Ist-Positionen der Ausbringelemente alternativ oder zusätzlich über die Lenkung des Anbaugeräts ausgeglichen werden können.

Es ist ferner ein erfindungsgemäßes landwirtschaftliches Anbaugerät vorteilhaft, bei welchem die Signalerzeugungseinrichtung dazu eingerichtet ist, Geschwindigkeitseinstellbefehle für das Antriebsfahrzeug zu erzeugen. Über die Geschwindigkeitseinstellbefehle kann das Anbaugerät eine Änderung der Fahrgeschwindigkeit des Antriebsfahrzeugs veranlassen. Somit kann das Anbaugerät beispielsweise eine Verringerung der Geschwindigkeit veranlassen, wenn eine Kurvenfahrt des Maschinenverbundes erforderlich ist oder die Reihenerfassung nur unpräzise erfolgt. Durch die Verringerung der Geschwindigkeit wird auch dem Bediener die Möglichkeit verschafft, manuell in die Steuerung des Anbaugeräts und/oder des Antriebsfahrzeugs einzugreifen. Eine entsprechende Kurvenfahrt kann erforderlich sein, wenn die Pflanzenreihen bogenförmigen Reihenpfaden folgen, beispielsweise im Randbereich einer landwirtschaftlichen Nutzfläche oder im Nahbereich eines Hindernisses.

Das erfindungsgemäße landwirtschaftliche Anbaugerät wird ferner dadurch vorteilhaft weitergebildet, dass die Signalerzeugungseinrichtung dazu eingerichtet ist, Geschwindigkeitseinstellbefehle für das Antriebsfahrzeug in Abhängigkeit der durch die Reihenerfassungseinrichtung erfassten Positionen und/oder Verläufe von Pflanzenreihen zu erzeugen. Wenn ein gradliniger Reihenverlauf erfasst wird, kann die Fahrgeschwindigkeit des Antriebsfahrzeugs ohne Beeinträchtigung des Bearbeitungsergebnisses erhöht werden, da in diesem Fall wenige Lenkeingriffe erforderlich sind. Wenn ein gekrümmter oder bogenförmiger Reihenverlauf erfasst wird, kann die Fahrgeschwindigkeit des Antriebsfahrzeugs zur Vermeidung einer Beeinträchtigung des Bearbeitungsergebnisses reduziert werden. Die Fahrgeschwindigkeit ist in diesem Fall so weit zu reduzieren, dass über Lenkeingriffe einen in einem Toleranzbereich liegende Anpassung des Bewegungspfads des Antriebsfahrzeugs und des Anbaugeräts an den Reihenverlauf erfolgen kann. Eine Verringerung der Fahrgeschwindigkeit kann insbesondere dann notwendig sein, wenn die Regelgeschwindigkeit des Antriebsfahrzeugs nicht ausreichend ist, um erforderliche Lenkeingriffe rechtzeitig umsetzen zu können.

Dem landwirtschaftlichen Anbaugerät kann ein zulässiger Geschwindigkeitsbereich vorgegeben werden, innerhalb welchem eine automatische Anpassung der Fahrgeschwindigkeit durch das Anbaugerät veranlasst werden kann. Die Vorgabe des zulässigen Geschwindigkeitsbereichs kann werksseitig vorgegeben und/oder durch den Bediener einstellbar sein. Durch die Vorgabe des zulässigen Geschwindigkeitsbereichs werden insbesondere zu hohe Fahrgeschwindigkeiten vermieden, welche zu einer Beeinträchtigung des Bearbeitungsergebnisses führen, beispielsweise durch eine zu hohe Verschüttung aufgrund von übermäßiger Erdbewegung.

Alternativ oder zusätzlich kann die Signalerzeugungseinrichtung dazu eingerichtet sein, die Geschwindigkeitseinstellbefehle für das Antriebsfahrzeug in Abhängigkeit einer Regelgeschwindigkeit des Antriebsfahrzeugs und/oder der Bewegungsrichtung des Anbaugeräts relativ zu den erfassten Pflanzenreihen zu erzeugen. Wenn das Antriebsfahrzeug über eine vergleichsweise geringe Regelgeschwindigkeit verfügt, ist die Fahrgeschwindigkeit des Antriebsfahrzeugs auf das träge Regelungsverhalten anzupassen. Umso höher die Regelgeschwindigkeit des Antriebsfahrzeugs ist, desto höher kann die Fahrgeschwindigkeit des Antriebsfahrzeugs eingestellt werden, da mit der Regelgeschwindigkeit des Antriebsfahrzeugs auch die Reaktionsfähigkeit des Maschinenverbundes steigt.

Es ist ferner ein erfindungsgemäßes landwirtschaftliches Anbaugerät vorteilhaft, welches eine Bewertungseinrichtung aufweist, wobei die Bewertungseinrichtung dazu eingerichtet ist, das Ergebnis der Bearbeitung der Reihenkulturen während eines Bearbeitungsvorgangs hinsichtlich zumindest eines fahrgeschwindigkeitsabhängigen Bearbeitungskriteriums zu bewerten. Beim Hacken stellt beispielsweise der Grad der Verschüttung der Pflanzen durch den aufgeworfenen Erdstrom ein fahrgeschwindigkeitsabhängiges Bearbeitungskriterium dar. Bei einer zu hohen Fahrgeschwindigkeit werden die Pflanzen von dem aufgeworfenen Erdstrom in einem unbeabsichtigten Maße verschüttet. Die Bewertungseinrichtung kann in diesem Fall dazu eingerichtet sein, den Grad der Verschüttung der Pflanzen zu detektieren, wobei die Detektion des Verschüttungsgrads beispielsweise kamerabasiert und/oder sensorbasiert erfolgen kann. Die Signalerzeugungseinrichtung ist vorzugsweise dazu eingerichtet, Geschwindigkeitseinstellbefehle für das Antriebsfahrzeug in Abhängigkeit des durch die Bewertungseinrichtung bewerteten Ergebnisses der Bearbeitung der Reihenkulturen zu erzeugen. Die Fahrgeschwindigkeit wird also in Abhängigkeit der erzielten Arbeitsqualität angepasst. Sofern das Bearbeitungsergebnis außerhalb eines akzeptablen Toleranzbereichs liegt, veranlasst die Signalerzeugungseinrichtung vorzugsweise eine Reduzierung der Fahrgeschwindigkeit. Sofern das Bearbeitungsergebnis innerhalb eines Toleranzbereichs liegt, kann die Signalerzeugungseinrichtung eine Erhöhung der Fahrgeschwindigkeit veranlassen, sodass es zu einer Verringerung der Bearbeitungsdauer kommt. Die Bewertungseinrichtung kann in die Reihenerfassungseinrichtung integriert sein. Ferner kann die Bewertungseinrichtung eine oder mehrere Kameras und/oder einen oder mehrere Sensoren der Reihenerfassungseinrichtung zur Bewertung des Bearbeitungsergebnisses nutzen.

In einer Weiterbildung weist das erfindungsgemäße landwirtschaftliche Anbaugerät einen Drehratensensor auf, welcher dazu eingerichtet ist, eine Änderung der Ausrichtung des Anbaugeräts relativ zu der Längsrichtung der Pflanzenreihen zu erfassen, wobei die Reihenerfassungseinrichtung dazu eingerichtet ist, die Positionen und/oder Verläufe von Pflanzenreihen auf der landwirtschaftlichen Nutzfläche unter Berücksichtigung der durch den Drehratensensor erfassten Änderung der Ausrichtung des Anbaugeräts zu erfassen. Lenkbewegungen an dem Antriebsfahrzeug haben eine Änderung der Ausrichtung und somit eine Schiefstellung des Anbaugeräts zur Folge. Die Schiefstellung beeinträchtigt die Reihenerfassung, beispielsweise durch die Schiefstellung von einer oder mehreren Kameras oder einem oder mehreren Sensoren. Die Schiefstellung einer Kamera führt zu einem veränderten Aufnahmewinkel. Die Schiefstellung eines Sensors führt zu einem veränderten Detektionswinkel. Die veränderten Aufnahme- und/oder Detektionswinkel können die Reihenerfassung verfälschen. Die Sensordaten des Drehratensensors werden der Reihenerfassung zur Verfügung gestellt, damit die Kamerabilder oder Sensordaten unter Berücksichtigung der Änderung der Ausrichtung des Anbaugeräts korrigiert werden können. Der Drehratensensor kann beispielsweise ein Gierratensensor sein.

In einer weiteren bevorzugten Ausführungsform weist das erfindungsgemäße landwirtschaftliche Anbaugerät einen Neigungssensor auf, welcher dazu eingerichtet ist, eine Neigung des Anbaugeräts relativ zu einer Horizontalachse, dem Boden der landwirtschaftlichen Nutzfläche, einem Blätterdach und/oder einer Bestandsoberkante zu erfassen. Die Signalerzeugungseinrichtung ist vorzugsweise dazu eingerichtet, die Lenkbefehle für das Antriebsfahrzeug auch in Abhängigkeit der durch den Neigungssensor erfassten Neigung des Anbaugeräts zu erzeugen. Bei der Bearbeitung am Hang kann auf diese Weise eine frühzeitige Hanggegenkorrektur erfolgen, wenn das Antriebsfahrzeug am Hang wegzurutschen droht oder bereits weggerutscht ist. Der Neigungssensor erlaubt eine frühzeitige Detektion einer Abdrift-Situation, sodass dem Abdrift des Maschinenverbundes am Hang über einen Lenkeingriff frühzeitig entgegengewirkt werden kann.

Die Reihenerfassungseinrichtung kann ferner dazu eingerichtet sein, die Positionen und/oder Verläufe von Pflanzenreihen auf der landwirtschaftlichen Nutzfläche unter Berücksichtigung der durch den Neigungssensor erfassten Neigung des Anbaugeräts zu erfassen. Bei der Bearbeitung am Hang stellt sich an dem Antriebsfahrzeug und dem Anbaugerät ein Neigungswinkel ein. Die Neigung beeinträchtigt die Reihenerfassung, beispielsweise durch eine damit verbundene Neigung einer oder mehrerer Kameras und/oder eines oder mehrerer Sensoren. Dies führt zu veränderten Aufnahme- bzw. Detektionswinkeln, sodass die Reihendetektion verfälscht wird. Die Sensordaten des Neigungssensors werden der Reihenerfassungseinrichtung zur Verfügung gestellt, damit die Kamerabilder oder Sensordaten unter Berücksichtigung der aktuellen Geräteneigung ausgewertet werden können.

In einer weiteren bevorzugten Ausführungsform des erfindungsgemäßen landwirtschaftlichen Anbaugeräts weist die Reihenerfassungseinrichtung eine oder mehrere Kameras zur Reihenerfassung auf. Alternativ oder zusätzlich weist die Reihenerfassungseinrichtung einen oder mehrere Sensoren zur Reihenerfassungseinrichtung auf. Alternativ oder zusätzlich weist die Reihenerfassungseinrichtung einen oder mehrere Taster zur Reihenerfassung auf. Die Sensoren können beispielsweise Ultraschallsensoren sein. Die Reihentaster können beispielsweise bei der Reihenerfassung in einem Pflanzenbestand eingesetzt werden, bei welchem stabile Pflanzenstängel vorhanden sind. Somit kann eine Reihenerfassungseinrichtung mit einem oder mehreren Reihentastern insbesondere zur Reihenerfassung in einem Maispflanzenbestand eingesetzt werden. Ferner kann das landwirtschaftliche Anbaugerät dazu eingerichtet sein, Real-Time-Kinematik (RTK) Signale zu erfassen, sodass die Lenkbefehle für das Antriebsfahrzeug auch unter Berücksichtigung der erfassten RTK-Signale erzeugt werden können.

Ferner könnte beim Einsäen eine Furche in den Boden der landwirtschaftlichen Nutzfläche gezogen werden, wobei die Furche beispielsweise äquidistant zu einer Pflanzenreihe verläuft. Die während des Sävorgangs erzeugte Furche kann dann beispielsweise mit einem Tastrad der Reihenerfassungseinrichtung erfasst werden. Das Tastrad weist vorzugsweise einen Sensor auf, sodass die Verläufe und/oder Positionen der Pflanzenreihen über die sensorische Erfassung der beim Einsäen angelegten Furche ermittelt werden können.

Die der Erfindung zugrundeliegende Aufgabe wird ferner durch einen landwirtschaftlichen Maschinenverbund der eingangs genannten Art gelöst, wobei das landwirtschaftliche Anbaugerät des erfindungsgemäßen landwirtschaftlichen Maschinenverbunds nach einer der vorstehend beschriebenen Ausführungsformen ausgebildet ist und das Antriebsfahrzeug dazu eingerichtet ist, auf Grundlage von Lenkbefehlen des Anbaugeräts selbsttätig einen Lenkvorgang auszuführen. Hinsichtlich der Vorteile und Modifikationen des erfindungsgemäßen landwirtschaftlichen Maschinenverbundes wird zunächst auf die Vorteile und Modifikationen des erfindungsgemäßen Anbaugeräts verwiesen.

Das Antriebsfahrzeug kann beispielsweise ein Traktor sein. Das Antriebsfahrzeug ist vorzugsweise dazu eingerichtet, auf Grundlage von Geschwindigkeitseinstellbefehlen des Anbaugeräts selbsttätig eine Einstellung der Fahrgeschwindigkeit vorzunehmen. Der landwirtschaftliche Maschinenverbund wird somit auf Basis der Reihenerfassung selbsttätig gesteuert, sodass keine Lenk- und/oder Geschwindigkeitseinstelleingriffe durch den Fahrzeugführer des Antriebsfahrzeugs während der Bearbeitung der landwirtschaftlichen Nutzfläche erforderlich sind.

Die der Erfindung zugrundeliegende Aufgabe wird ferner durch ein Verfahren der eingangs genannten Art gelöst, wobei im Rahmen des erfindungsgemäßen Verfahrens mittels einer Signalerzeugungseinrichtung des Anbaugeräts Lenkbefehle für ein Antriebsfahrzeug des Maschinenverbundes, an welchem das Anbaugerät angebaut ist, in Abhängigkeit der durch die Reihenerfassungseinrichtung erfassten Positionen und/oder Verläufe von Pflanzenreihen erzeugt werden. Die von der Signalerzeugungseinrichtung erzeugten Lenkbefehle werden dann an eine Steuerungseinheit des Antriebsfahrzeugs übermittelt. Anschließend führt das Antriebsfahrzeug auf Grundlage der übermittelten Lenkbefehle des Anbaugeräts selbsttätig einen Lenkvorgang aus. Das erfindungsgemäße Verfahren zum Bearbeiten von Reihenkulturen wird vorzugsweise mittels eines landwirtschaftlichen Maschinenverbunds nach einer der vorstehend beschriebenen Ausführungsformen und/oder unter Verwendung eines landwirtschaftlichen Anbaugeräts nach einer der vorstehend beschriebenen Ausführungsformen ausgeführt.

In einer bevorzugten Ausführungsform des erfindungsgemäßen Verfahrens werden Geschwindigkeitseinstellbefehle für das Antriebsfahrzeug mittels der Signalerzeugungseinrichtung des Anbaugeräts erzeugt. Das Erzeugen der Geschwindigkeitseinstellbefehle erfolgt vorzugsweise in Abhängigkeit der durch die Reihenerfassungseinrichtung erfassten Positionen und/oder Verläufe von Pflanzenreihen. Die von der Signalerzeugungseinrichtung erzeugten Geschwindigkeitseinstellbefehle werden vorzugsweise an eine Steuerungseinheit des Antriebsfahrzeugs übermittelt, sodass das Antriebsfahrzeug auf Grundlage der übermittelten Geschwindigkeitseinstellbefehle des Anbaugeräts die Fahrgeschwindigkeit selbsttätig einstellen kann.

Darüber hinaus ist ein erfindungsgemäßes Verfahren vorteilhaft, bei welchem das Ergebnis der Bearbeitung der Reihenkulturen während eines Bearbeitungsvorgangs hinsichtlich zumindest eines Fahrgeschwindigkeitsabhängigen Bearbeitungskriteriums mittels einer Bewertungseinrichtung des Anbaugeräts bewertet wird. Das Erzeugen der Geschwindigkeitseinstellbefehle für das Antriebsfahrzeug erfolgt vorzugsweise in Abhängigkeit des durch die Bewertungseinrichtung bewerteten Ergebnisses der Bearbeitung der Reihenkulturen. Alternativ oder zusätzlich wird eine Änderung der Ausrichtung des Anbaugeräts relativ zu der Längsrichtung der Pflanzenreihen mittels eines Drehratensensors des Anbaugeräts erfasst. Das Erfassen der Positionen und/oder Verläufe von Pflanzenreihen auf der landwirtschaftlichen Nutzfläche erfolgt vorzugsweise unter Berücksichtigung der durch den Drehratensensor erfassten Änderung der Ausrichtung des Anbaugeräts.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen landwirtschaftlichen Maschinenverbundes während der Bearbeitung einer landwirtschaftlichen Nutzfläche in der einer Draufsicht;
- Fig. 2: ein weiteres Ausführungsbeispiel des erfindungsgemäßen landwirtschaftlichen Maschinenverbundes während der Bearbeitung einer landwirtschaftlichen Nutzfläche in der einer Draufsicht;
- Fig. 3: ein weiteres Ausführungsbeispiel des erfindungsgemäßen landwirtschaftlichen Maschinenverbundes während der Bearbeitung einer landwirtschaftlichen Nutzfläche in der einer Draufsicht; und
- Fig. 4: ein weiteres Ausführungsbeispiel des erfindungsgemäßen landwirtschaftlichen Maschinenverbundes während der Bearbeitung einer landwirtschaftlichen Nutzfläche in der einer Draufsicht.

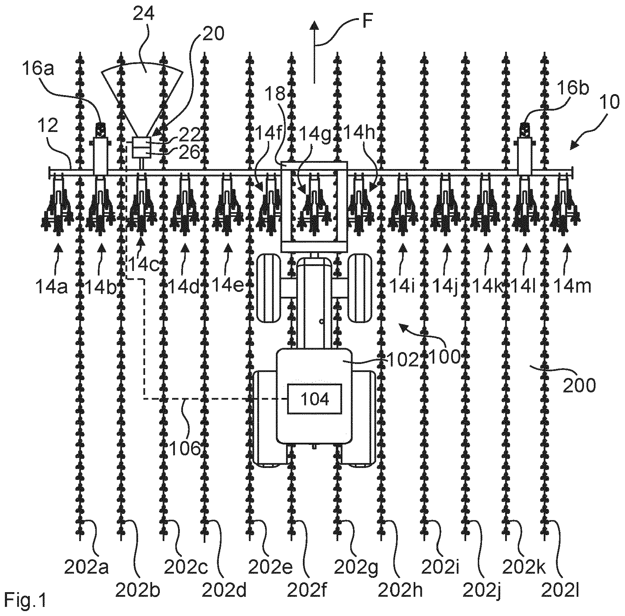

Die Fig. 1 zeigt einen landwirtschaftlichen Maschinenverbund 100 mit einem Antriebsfahrzeug 102 und einem landwirtschaftlichen Anbaugerät 10. Das Antriebsfahrzeug 102 ist ein Traktor, wobei das Anbaugerät 10 an einer frontseitigen Kupplungsvorrichtung des Antriebsfahrzeugs 102 angebaut ist. Das Anbaugerät 10 ist eine landwirtschaftliche Hacke mit mehreren äquidistant voneinander beabstandeten Bodenbearbeitungswerkzeugen 14a-14m. Die Bodenbearbeitungswerkzeuge 14a-14m sind quer zur Fahrtrichtung F nebeneinander und äquidistant voneinander beabstandet angeordnet. Die Bodenbearbeitungswerkzeuge 14a-14m sind Hackwerkzeuge, welche an einem sich quer zur Fahrtrichtung F erstreckenden Querträger 12 des Anbaugeräts 10 befestigt sind.

Der Querträger 12 wird über die Räder 16a, 16b des Anbaugeräts 10 gegenüber dem Boden der landwirtschaftlichen Nutzfläche 200 abgestützt. Der Querträger 12 ist über eine als Verschieberahmen ausgebildete Verstelleinrichtung 18 mit der frontseitigen Kupplungsvorrichtung des Antriebsfahrzeugs 102 verbunden.

Die Verstelleinrichtung 18 kann einen oder mehrere Verstellantriebe aufweisen, über welche der Querträger 12 in Längs- und/oder Querrichtung verfahren und/oder verschwenkt werden kann, um die Bodenbearbeitungswerkzeuge 14a-14m mittig zwischen den Pflanzenreihen 202a-202l zu positionieren. Ferner können die Bodenbearbeitungswerkzeuge 14a-14m entlang des Querträgers 12 verschiebbar und/oder relativ zu dem Querträger 12 verschwenkbar sein.

Das Anbaugerät 10 ist mit einer Reihenerfassungseinrichtung 20 ausgestattet, über welche während eines Bearbeitungsvorgangs die Positionen und Verläufe der Pflanzenreihen 202a-202l auf der landwirtschaftlichen Nutzfläche 200 erfasst werden können. Die Reihenerfassungseinrichtung 20 weist eine Kamera 22 zur Reihenerfassung auf. Alternativ oder zusätzlich könnte die Reihenerfassungseinrichtung 20 auch einen oder mehrere Sensoren und/oder einen oder mehrere Taster zur Reihenerfassung aufweisen. Die Kamera 22 weist einen Aufnahmebereich 24 auf, wobei die Positionen und Verläufe der sich in dem Aufnahmebereich 24 befindenden Pflanzenreihen 202b, 202c durch die Reihenerfassungseinrichtung 22 detektiert werden können. Die Positions- und Verlaufsdetektion der Pflanzenreihen 202b, 202c erfolgt über eine Auswertung der durch die Kamera 22 aufgezeichneten Bildaufnahmen.

Das landwirtschaftliche Anbaugerät 10 kann einen Drehratensensor aufweisen, über welchen eine Änderung der Ausrichtung es Anbaugeräts 10 relativ zu der Längsrichtung der Pflanzenreihen 202a-202l erfasst werden kann. Die Änderung der Ausrichtung des Anbaugeräts 10 für zu einer Schiefstellung des Anbaugeräts 10, welche den Aufnahmewinkel der Kamera 22 verändert. Über die durch den Drehratensensor erfasste Änderung der Ausrichtung des Anbaugeräts 10 kann der veränderte Aufnahmewinkel der Kamera 22 bei der Reihenerfassung berücksichtigt werden, sodass die Verläufe und Positionen der Pflanzenreihen 202b, 202c mit einer höheren Präzision bestimmt werden. Die Kamerabilder der Kamera 22 werden also unter Berücksichtigung der aktuellen Schiefstellung des Anbaugeräts 10 und somit unter Berücksichtigung der aktuellen Schiefstellung der Kamera 22 ausgewertet.

Das landwirtschaftliche Anbaugerät 10 weist ferner eine Signalerzeugungseinrichtung 26 auf, welche Lenkbefehle für das Antriebsfahrzeug 102 erzeugt. Die durch die Signalerzeugungseinrichtung 26 erzeugten Lenkbefehle werden einer Steuerungseinheit 104 des Antriebsfahrzeugs 102 über die Datenverbindung 106 übermittelt. Hierzu umfasst das Anbaugerät 10 eine Kommunikationseinrichtung, welche einen bidirektionalen Datenaustausch mit der Steuerungseinrichtung 104 des Antriebsfahrzeugs 102 erlaubt. Die Datenverbindung 106 kann eine kabelgebundene oder eine drahtlose Datenverbindung sein.

Die Signalerzeugungseinrichtung 26 erzeugt die Lenkbefehle für das Antriebsfahrzeug 102 in Abhängigkeit der durch die Reihenerfassungseinrichtung 20 erfassten Positionen und Verläufe der Pflanzenreihen 202b, 202c. Über die Lenkbefehlerzeugung wird erreicht, dass das Anbaugerät 10 die Pflanzenreihen 202a-202l der landwirtschaftlichen Nutzfläche 200 in einer beabsichtigten Weise abfährt, nämlich derart, dass die Bodenbearbeitungswerkzeuge 14a-14m stets mittig zwischen den Pflanzenreihen 202a-202l angeordnet sind. Über die durch die Signalerzeugungseinrichtung 26 erzeugten Lenkbefehle erfolgt letztendlich ein von dem Anbaugerät 10 veranlasster Lenkeingriff am Antriebsfahrzeug 102. Das Antriebsfahrzeug 102 wird folglich fremdgelenkt, sodass kein manueller Lenkeingriff des Fahrzeugführers erforderlich ist. Ferner kann am Antriebsfahrzeug 102 auf eine Fahrspurerkennung verzichtet werden, da eine ausschließlich fahrzeugseitige Lenkautomatik nicht erforderlich ist. Der Maschinenverbund 100 aus dem Antriebsfahrzeug 102 und dem Anbaugerät 10 bilden folglich ein sogenanntes Tractor-Implement-Management-System.

Bei der Lenkbefehlerzeugung kann die Signalerzeugungseinrichtung 26 die Abmessungen und/oder Geometrien des Antriebsfahrzeugs 102 und/oder des Anbaugeräts 10 berücksichtigen. Ferner kann die Signalerzeugungseinrichtung 26 bei der Lenkbefehlerzeugung die Reifenpositionen, die Nachlaufeigenschaften und/oder die Schwenkeigenschaften des Anbaugeräts 10 berücksichtigen.

Die Reihenerfassungseinrichtung 20 ist an dem Querträger 12 des Anbaugeräts 10 befestigt und in Fahrtrichtung F ausgerichtet. Der Detektionsbereich der Reihenerfassungseinrichtung 20 ist in Fahrtrichtung F vor den Bodenbearbeitungswerkzeugen 14a-14m angeordnet.

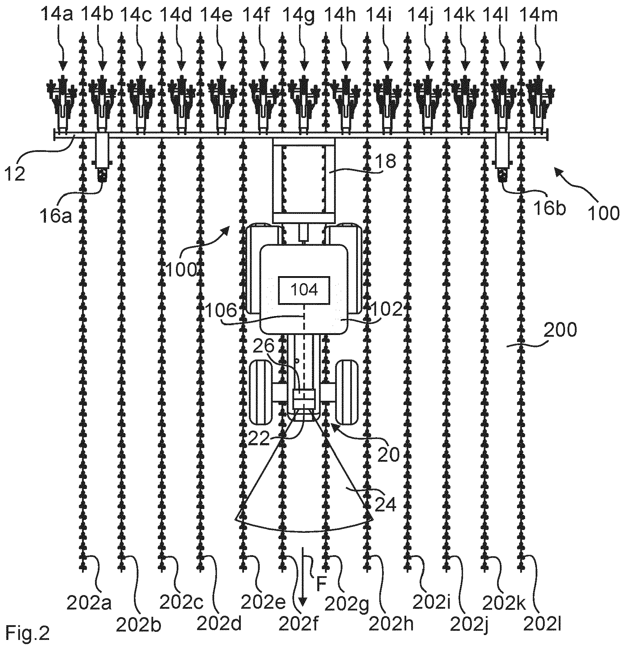

Die Fig. 2 zeigt ebenfalls einen Maschinenverbund 100 aus einem als Traktor ausgebildeten Antriebsfahrzeug 102 und einem als Hacke ausgebildeten Anbaugerät 10. Bei der dargestellten Ausführungsform ist das Anbaugerät 10 an einer heckseitigen Kupplungsvorrichtung des Antriebsfahrzeugs 102 befestigt.

Die Reihenerfassungseinrichtung 20 des Anbaugeräts 10 ist in diesem Fall in einem Frontbereich des Antriebsfahrzeugs 102 angeordnet. Beispielsweise ist die Reihenerfassungseinrichtung 20 reversibel und zerstörungsfrei lösbar an einer Motorabdeckung des Antriebsfahrzeugs 102 befestigt. Alternativ kann die Reihenerfassungseinrichtung 20 reversibel und zerstörungsfrei lösbar an am Dach oder einem Frontkraftheber des Antriebsfahrzeugs 102 befestigt sein. Die Kamera 22 der Reihenerfassungseinrichtung 20 ist in Fahrtrichtung F ausgerichtet, wobei die Pflanzenreihen 202e-202h in dem Aufnahmebereich 24 der Kamera 22 liegen. Über eine Bildauswertung der Kameraaufnahmen können während des Bearbeitungsvorgangs die Positionen und Verläufe der Pflanzenreihen 202e-202h ermittelt werden.

Die Reihenerfassungseinrichtung 20 ist erneut über ein Kommunikationsmodul mit einer Steuerungseinheit 104 des Antriebsfahrzeugs 102 verbunden, sodass von der Signalerzeugungseinrichtung 26 erzeugte Lenkbefehle für das Antriebsfahrzeug 102 über die Datenverbindung 106 an das Antriebsfahrzeug 102 übermittelt werden können.

Die Signalerzeugungseinrichtung 26 ist ferner dazu eingerichtet, Geschwindigkeitseinstellbefehle für das Antriebsfahrzeug 102 zu erzeugen. Die Geschwindigkeitseinstellbefehle werden in Abhängigkeit der durch die Reihenerfassungseinrichtung 20 erfassten Positionen und Verläufe der Pflanzenreihen 202e-202h erzeugt. Über die Geschwindigkeitseinstellbefehle kann das Anbaugerät 10 folglich eine Änderung der Fahrgeschwindigkeit des Antriebsfahrzeugs 102 veranlassen. Wenn ein gradliniger Reihenverlauf erfasst wird, kann die Fahrgeschwindigkeit des Antriebsfahrzeugs 102 ohne Beeinträchtigung des Bearbeitungsergebnisses erhöht werden, da in diesem Fall wenige kritische Lenkeingriffe erforderlich sind. Wenn ein gekrümmter Reihenverlauf erfasst wird, kann die Fahrgeschwindigkeit des Antriebsfahrzeugs 102 zur Vermeidung einer Beeinträchtigung des Bearbeitungsergebnisses reduziert werden. In diesem Fall ist die Fahrgeschwindigkeit zumindest so weit zu reduzieren, dass über Lenkeingriffe ein Bearbeitungsergebnis erreicht werden kann, welches innerhalb eines Toleranzbereichs liegt.

Um zu prüfen, ob das Bearbeitungsergebnis innerhalb eines Toleranzbereichs liegt, kann das Anbaugerät 10 ferner eine Bewertungseinrichtung umfassen, über welche das Ergebnis der Bearbeitung der Reihenkulturen während des Bearbeitungsvorgangs hinsichtlich eines fahrgeschwindigkeitsabhängigen Bewertungskriteriums bewertet wird. Die Bewertungseinrichtung kann dazu eingerichtet sein, den Grad der Verschüttung der Pflanzen durch den während der Bearbeitung aufgeworfenen Erdstrom zu bestimmen. Die Verschüttung der Pflanzen durch den aufgeworfenen Erdstrom darf während des Bearbeitungsvorgangs einen Toleranzbereich nicht verlassen. Falls der Grad der Verschüttung der Pflanzen durch den aufgeworfenen Erdstrom den Toleranzbereich verlässt, erzeugt die Signalerzeugungseinrichtung 26 einen Geschwindigkeitseinstellbefehl, welcher zu einer Verringerung der Fahrgeschwindigkeit des Antriebsfahrzeugs 102 führt.

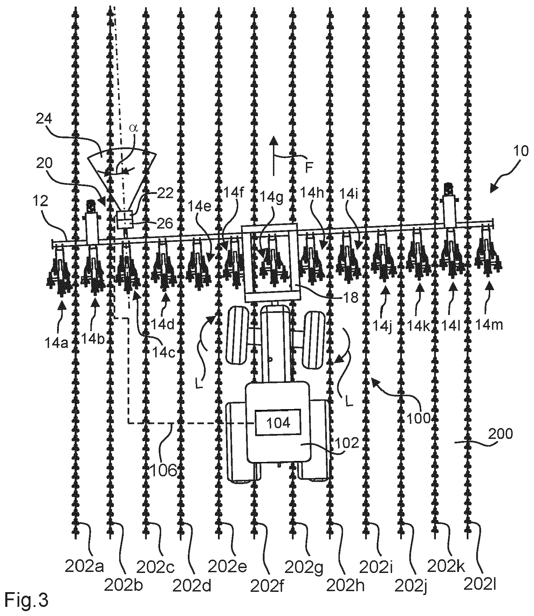

Die Fig. 3 zeigt eine ungewünschte schiefe Ausrichtung der Bodenbearbeitungswerkzeuge 14a-14m in Bezug auf die Längsachsen der Pflanzenreihen 202a-202l. Die Schrägstellung α der Bodenbearbeitungswerkzeuge 14a-14m führt außerdem dazu, dass die Bodenbearbeitungswerkzeuge 14a-14m nicht mittig zwischen den Pflanzenreihen 202a-202l positioniert sind.

Diese Fehlpositionierung der Bodenbearbeitungswerkzeuge 14a-14m in Bezug auf die Pflanzenreihen 202a-202l wird durch die Reihenerfassungseinrichtung 20 des Anbaugeräts 10 erfasst. Die Signalerzeugungseinrichtung 26 erzeugt auf Grundlage der erfolgten Reihenerfassung Lenkbefehle, welche über die Datenverbindung 106 an eine Steuerungseinheit 104 des Antriebsfahrzeugs 102 übermittelt werden. Die Steuerungseinheit 104 veranlasst auf Grundlage der empfangenen Lenkbefehle eine Lenkbewegung L an der Vorderachse des Antriebsfahrzeugs 102. Über die Lenkbewegung L an der Vorderachse des Antriebsfahrzeugs 102 erfolgt eine Korrektur der Positionierung der Bodenbearbeitungswerkzeuge 14a-14m, sodass die Bodenbearbeitungswerkzeuge 14a-14m sich ohne Schrägstellung wieder mittig zwischen den Pflanzenreihen 202a-202l durch den Boden der landwirtschaftlichen Nutzfläche 200 bewegen. Der durch das Anbaugerät 10 veranlasste Lenkeingriff am Antriebsfahrzeug 102 sorgt für die Eliminierung der Schrägstellung α.

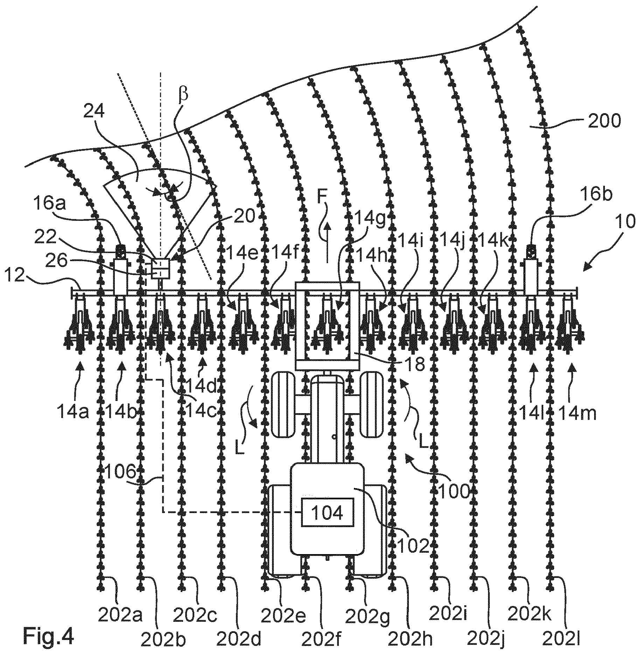

Die Fig. 4 zeigt einen Maschinenverbund 100 während der Bearbeitung einer landwirtschaftlichen Nutzfläche 200, wobei sich der Maschinenverbund 100 einem Kurvenabschnitt nähert, in welchem die Pflanzenreihen 202a-202l gebogenen Reihenpfaden folgen. In dem Kurvenbereich ergibt sich ein sich verändernder Differenzwinkel β zwischen der Längsachse des Maschinenverbundes 100 und den an die Pflanzenreihen 202a-202l anlegbaren Tangenten.

Über die Reihenerfassungseinrichtung 20 ist das Anbaugerät 10 dazu in der Lage, den gekrümmten bzw. bogenförmigen Verlauf der Pflanzenreihen 202b-202d frühzeitig zu erfassen und auf Grundlage des Verlaufs der Pflanzenreihen 202b-202d den Kurvenradius abzuleiten, sodass über die Signalerzeugungseinrichtung 26 unter Berücksichtigung von Vortriebsgeschwindigkeit und Regelgeschwindigkeit Lenkbefehle für das Antriebsfahrzeug 102 erzeugt werden können. Die von der Signalerzeugungseinrichtung 26 erzeugten Lenkbefehle werden über die Datenverbindung 106 an das Antriebsfahrzeug 102 übermittelt, wobei das Antriebsfahrzeug 102 die Lenkbefehle umsetzt, sodass eine Lenkbewegung L an der Vorderachse des Antriebsfahrzeugs 102 ausgeführt wird. Über die Lenkbewegung L bleiben die Bodenbearbeitungswerkzeuge 14a-14m auch innerhalb des Kurvenbereichs stets mittig zwischen den Pflanzenreihen 202a-202l, ohne dass ein manueller Lenkeingriff des Fahrzeugführers erforderlich ist.

### Bezugszeichenliste

- 10: Anbaugerät
- 12: Querträger
- 14a-14m: Bodenbearbeitungswerkzeuge
- 16a, 16b: Räder
- 18: Verstelleinrichtung
- 20: Reihenerfassungseinrichtung
- 22: Kamera
- 24: Aufnahmebereich
- 26: Signalerzeugungseinrichtung

- 100: Maschinenverbund
- 102: Antriebsfahrzeug
- 104: Steuerungseinheit
- 106: Datenverbindung

- 200: Nutzfläche
- 202a-202l: Pflanzenreihen

- F: Fahrtrichtung
- L: Lenkbewegung
- α: Schrägstellung
- β: Differenzwinkel

## Patentansprüche

1. Landwirtschaftliches Anbaugerät (10) zur Bearbeitung von Reihenkulturen, mit
- einer Reihenerfassungseinrichtung (20), welche dazu eingerichtet ist, während eines Bearbeitungsvorgangs Positionen und/oder Verläufe von Pflanzenreihen (202a-202l) auf einer landwirtschaftlichen Nutzfläche (200) zu erfassen;
**gekennzeichnet durch** eine Signalerzeugungseinrichtung (26), welche dazu eingerichtet ist, in Abhängigkeit der durch die Reihenerfassungseinrichtung (20) erfassten Positionen und/oder Verläufe von Pflanzenreihen (202a-202l) Lenkbefehle für ein Antriebsfahrzeug (102) zu erzeugen, an welchem das Anbaugerät (10) angebaut ist.

2. Landwirtschaftliches Anbaugerät (10) nach Anspruch 1,
**gekennzeichnet durch** eine Kommunikationseinrichtung, welche dazu eingerichtet ist, bidirektional Daten mit einer Steuerungseinheit (104) des Antriebsfahrzeugs (102) auszutauschen,
wobei die von der Signalerzeugungseinrichtung (26) erzeugten Lenkbefehle für das Antriebsfahrzeug (102) über die Kommunikationseinrichtung an das Antriebsfahrzeug (102) übermittelbar sind.

3. Landwirtschaftliches Anbaugerät (10) nach Anspruch 1 oder 2,
**gekennzeichnet durch** mehrere quer zur Fahrtrichtung (F) voneinander beabstandete Bodenbearbeitungswerkzeuge (14a-14m),
wobei die Signalerzeugungseinrichtung (26) dazu eingerichtet ist, die Lenkbefehle für das Antriebsfahrzeug (102) zur Korrektur von Relativpositionen zwischen Pflanzenreihen (202a-202l) und Bodenbearbeitungswerkzeugen (14a-14m) zu erzeugen.

4. Landwirtschaftliches Anbaugerät (10) nach einem der vorstehenden Ansprüche,
**gekennzeichnet durch** mehrere quer zur Fahrtrichtung (F) voneinander beabstandete Ausbringelemente, wobei die Signalerzeugungseinrichtung (26) dazu eingerichtet ist, die Lenkbefehle für das Antriebsfahrzeug (102) zur Korrektur von Relativpositionen zwischen Pflanzenreihen (202a-202l) und Ausbringelementen zu erzeugen.

5. Landwirtschaftliches Anbaugerät (10) nach einem der vorstehenden Ansprüche,
**dadurch gekennzeichnet, dass** die Signalerzeugungseinrichtung (26) dazu eingerichtet ist, Geschwindigkeitseinstellbefehle für das Antriebsfahrzeug (102) zu erzeugen.

6. Landwirtschaftliches Anbaugerät (10) nach Anspruch 5,
**dadurch gekennzeichnet, dass** die Signalerzeugungseinrichtung (26) dazu eingerichtet ist, Geschwindigkeitseinstellbefehle für das Antriebsfahrzeug (102) in Abhängigkeit der durch die Reihenerfassungseinrichtung (20) erfassten Positionen und/oder Verläufe von Pflanzenreihen (202a-202l) zu erzeugen.

7. Landwirtschaftliches Anbaugerät (10) nach Anspruch 5 oder 6,
**gekennzeichnet durch** eine Bewertungseinrichtung, welche dazu eingerichtet ist, das Ergebnis der Bearbeitung der Reihenkulturen während eines Bearbeitungsvorgangs hinsichtlich zumindest eines fahrgeschwindigkeitsabhängigen Bearbeitungskriteriums zu bewerten, wobei die Signalerzeugungseinrichtung (26) dazu eingerichtet ist, Geschwindigkeitseinstellbefehle für das Antriebsfahrzeug (102) in Abhängigkeit des durch die Bewertungseinrichtung bewerteten Ergebnisses der Bearbeitung der Reihenkulturen zu erzeugen.

8. Landwirtschaftliches Anbaugerät (10) nach einem der vorstehenden Ansprüche,
**gekennzeichnet durch** einen Drehratensensor, welcher dazu eingerichtet ist, eine Änderung der Ausrichtung des Anbaugeräts (10) relativ zu der Längsrichtung der Pflanzenreihen (202a-202l) zu erfassen,
wobei die Reihenerfassungseinrichtung (20) dazu eingerichtet ist, die Positionen und/oder Verläufe von Pflanzenreihen (202a-202l) auf der landwirtschaftlichen Nutzfläche (200) unter Berücksichtigung der durch den Drehratensensor erfassten Änderung der Ausrichtung des Anbaugeräts (10) zu erfassen.

9. Landwirtschaftliches Anbaugerät (10) nach einem der vorstehenden Ansprüche,
**gekennzeichnet durch** einen Neigungssensor, welcher dazu eingerichtet ist, eine Neigung des Anbaugeräts (10) relativ zu einer Horizontalebene, dem Boden der landwirtschaftlichen Nutzfläche (200), einem Blätterdach und/oder einer Bestandsoberkante zu erfassen,
**dadurch gekennzeichnet, dass** die Signalerzeugungseinrichtung (26) dazu eingerichtet ist, die Lenkbefehle für das Antriebsfahrzeug (102) auch in Abhängigkeit der durch den Neigungssensor erfassten Neigung des Anbaugeräts (10) zu erzeugen.

10. Landwirtschaftliches Anbaugerät (10) nach einem der vorstehenden Ansprüche,
**dadurch gekennzeichnet, dass** die Reihenerfassungseinrichtung (20) eine oder mehrere Kameras (22), einen oder mehrere Sensoren und/oder einen oder mehrere Taster zur Reihenerfassung aufweist.

11. Landwirtschaftlicher Maschinenverbund (100), mit
- einem landwirtschaftlichen Anbaugerät (10); und
- einem Antriebsfahrzeug (102), an welchem das Anbaugerät (10) angebaut ist;
**dadurch gekennzeichnet, dass** das landwirtschaftliche Anbaugerät (10) nach einem der vorstehenden Ansprüche ausgebildet ist und das Antriebsfahrzeug (102) dazu eingerichtet ist, auf Grundlage von Lenkbefehlen des Anbaugeräts (10) selbsttätig einen Lenkvorgang auszuführen.

12. Verfahren zum Bearbeiten von Reihenkulturen mittels eines landwirtschaftlichen Maschinenverbundes (100) gemäß Anspruch 11, mit dem Schritt:
- Erfassen von Positionen und/oder Verläufen von Pflanzenreihen (202a-202l) auf einer landwirtschaftlichen Nutzfläche (200) während eines Bearbeitungsvorgangs mittels einer Reihenerfassungseinrichtung (20) eines landwirtschaftlichen Anbaugeräts (10) des landwirtschaftlichen Maschinenverbundes (100);
**gekennzeichnet durch** die Schritte:
- Erzeugen von Lenkbefehlen für ein Antriebsfahrzeug (102) des Maschinenverbundes (100), an welchem das Anbaugerät (10) angebaut ist, in Abhängigkeit der durch die Reihenerfassungseinrichtung (20) erfassten Positionen und/oder Verläufe von Pflanzenreihen (202a-202l) mittels einer Signalerzeugungseinrichtung (26) des Anbaugeräts (10);
- Übermitteln der von der Signalerzeugungseinrichtung (26) erzeugten Lenkbefehle an eine Steuerungseinheit (104) des Antriebsfahrzeugs (102); und
- selbsttätiges Ausführen eines Lenkvorgangs durch das Antriebsfahrzeug (102) auf Grundlage der übermittelten Lenkbefehle des Anbaugeräts (10).

13. Verfahren nach Anspruch 12,
**gekennzeichnet durch** den Schritt:
- Erzeugen von Geschwindigkeitseinstellbefehlen für das Antriebsfahrzeug (102) mittels der Signalerzeugungseinrichtung (26) des Anbaugeräts (10);
wobei das Erzeugen der Geschwindigkeitseinstellbefehle vorzugsweise in Abhängigkeit der durch die Reihenerfassungseinrichtung (20) erfassten Positionen und/oder Verläufe von Pflanzenreihen (202a-202l) erfolgt.

14. Verfahren nach Anspruch 13,
**gekennzeichnet durch** den Schritt:
- Bewerten des Ergebnisses der Bearbeitung der Reihenkulturen während eines Bearbeitungsvorgangs hinsichtlich zumindest eines fahrgeschwindigkeitsabhängigen Bearbeitungskriteriums mittels einer Bewertungseinrichtung des Anbaugeräts (10);
wobei das Erzeugen der Geschwindigkeitseinstellbefehle für das Antriebsfahrzeug (102) vorzugsweise in Abhängigkeit des durch die Bewertungseinrichtung bewerteten Ergebnisses der Bearbeitung der Reihenkulturen erfolgt.

15. Verfahren nach einem der Ansprüche 12 bis 14,
**gekennzeichnet durch** den Schritt:
- Erfassen einer Änderung der Ausrichtung des Anbaugeräts (10) relativ zu der Längsrichtung der Pflanzenreihen (202a-202l) mittels eines Drehratensensors des Anbaugeräts (10),
wobei das Erfassen der Positionen und/oder Verläufe von Pflanzenreihen (202a-202l) auf der landwirtschaftlichen Nutzfläche (200) unter Berücksichtigung der durch den Drehratensensor erfassten Änderung der Ausrichtung des Anbaugeräts (10) erfolgt.

## Claims

1. Agricultural attachment (10) for cultivating row crops, comprising
- a row-detection device (20) adapted to detect, during a cultivation process, locations and/or courses of rows of plants (202a-202l) on farmland (200);
**characterized by** a signal generating device (26) adapted to generate steering commands for a drive vehicle (102) to which the attachment (10) is attached, in accordance with the locations and/or courses of the rows of plants (202a-202l) detected by the row-detection device (20).

2. Agricultural attachment (10) according to claim 1,
**characterized by** a communication device which is adapted to exchange data bidirectionally with a control unit (104) of the drive vehicle (102),
wherein the steering commands for the drive vehicle (102) generated by the signal generation device (26) can be transmitted to the drive vehicle (102) via the communication device.

3. Agricultural attachment (10) according to claim 1 or 2,
**characterized by** a plurality of soil cultivating tools (14a-14m) spaced apart transversely to the direction of travel (F),
wherein the signal generation device (26) is adapted to generate the steering commands for the drive vehicle (102) to correct relative positions between plant rows (202a-202l) and soil cultivating tools (14a-14m).

4. Agricultural attachment (10) according to one of the preceding claims,
**characterized by** a plurality of spreading elements spaced apart transversely to the direction of travel (F), wherein the signal generation device (26) is adapted to generate the steering commands for the drive vehicle (102) to correct relative positions between plant rows (202a-202l) and spreading elements.

5. Agricultural attachment (10) according to one of the preceding claims,
**characterized in that** the signal generation device (26) is adapted to generate speed setting commands for the drive vehicle (102).

6. Agricultural attachment (10) according to claim 5,
**characterized in that** the signal generation device (26) is adapted to generate speed adjustment commands for the drive vehicle (102) as a function of the locations and/or courses of plant rows (202a-202l) detected by the row detection device (20).

7. Agricultural attachment (10) according to claim 5 or 6,
**characterized by** an evaluation device which is adapted to evaluate the result of the cultivation of the row crops during a cultivation process with regard to at least one cultivation criterion which is dependent on the driving speed,
wherein the signal generation device (26) is adapted to generate speed setting commands for the drive vehicle (102) as a function of the result of the processing of the row crops evaluated by the evaluation device.

8. Agricultural attachment (10) according to one of the preceding claims, **characterized by** a rotation rate sensor adapted to detect a change in alignment of the attachment (10) relative to the longitudinal direction of the plant rows (202a-202l), wherein the row-detection device (20) is adapted to detect the locations and/or courses of plant rows (202a-202l) on the farmland (200) taking into account the change in alignment of the attachment (10) detected by the rotation rate sensor.

9. Agricultural attachment (10) according to one of the preceding claims, **characterized by** an inclination sensor which is adapted to detect an inclination of the attachment (10) relative to a horizontal plane, the ground of the farmland (200), a leaf canopy and/or a crop top,
**characterized in that** the signal generation device (26) is adapted to generate the steering commands for the drive vehicle (102) also as a function of the inclination of the attachment (10) detected by the inclination sensor.

10. Agricultural attachment (10) according to one of the preceding claims, **characterized in that** the row-detection device (20) comprises one or more cameras (22), one or more sensors and/or one or more sensing devices for row detection.

11. Agricultural machine assembly (100), comprising
- an agricultural attachment (10); and
- a drive vehicle (102) on which the attachment (10) is mounted;
**characterized in that** the agricultural attachment (10) is configured according to one of the preceding claims, and the drive vehicle (102) is adapted to automatically perform a steering operation based on steering commands from the attachment (10).

12. Method for cultivating row crops by means of an agricultural machine assembly (100) according to claim 11, comprising the step:
- detecting locations and/or courses of plant rows (202a-202l) on a farmland (200) during a cultivation process by means of a row-detection device (20) of an agricultural attachment (10) of the agricultural machine assembly (100);
**characterized by** the steps of:
- generating steering commands for a drive vehicle (102) of the machine assembly (100), on which the attachment (10) is mounted, as a function of the locations and/or courses of plant rows (202a-202l) detected by the row-detection device (20) by means of a signal generation device (26) of the attachment (10);
- transmitting steering commands generated by the signal generation device (26) to a control unit (104) of the drive vehicle (102); and
- automatic execution of a steering operation by the drive vehicle (102) based on the transmitted steering commands of the attachment (10).

13. Method according to claim 12,
**characterized by** the step of:
- generating speed setting commands for the drive vehicle (102) by means of the signal generation device (26) of the attachment (10);
wherein generating said speed setting commands is preferably performed as a function of locations and/or courses of plant rows (202a-202l) detected by said row-detection device (20).

14. Method according to claim 13,
**characterized by** the step of:
- evaluating the result of the cultivation of the row crops during a cultivation process with regard to at least one cultivation criterion dependent on the driving speed by means of an evaluation device of the attachment (10);
wherein the generation of the speed setting commands for the drive vehicle (102) preferably takes place as a function of the result of the cultivation of the row crops evaluated by the evaluation device.

15. Method according to one of claims 12 to 14,
**characterized by** the step of:
- detecting a change in the alignment of the attachment (10) relative to the longitudinal direction of the plant rows (202a-202l) by means of a rotation rate sensor of the attachment (10),
wherein detecting the locations and/or courses of plant rows (202a-202l) on the farmland (200) is performed taking into account the change in alignment of the attachment (10) detected by the rotation rate sensor.

## Revendications

1. Outil agricole (10) permettant de traiter des cultures en rangs, comprenant
- un dispositif de détection de rangs (20) conçu pour détecter des positions et/ou des tracés de rangs de plantes (202a à 202l) sur une surface agricole utile (200) au cours d'une action de traitement ;
**caractérisé par** un dispositif de génération de signal (26) conçu pour, en fonction des positions et/ou des tracés de rangs de plantes (202a à 202l) détecté(e)s par le dispositif de détection de rangs (20), générer des instructions de direction destinées à un véhicule d'entraînement (102) sur lequel est monté l'outil (10).

2. Outil agricole (10) selon la revendication 1,
**caractérisé par** un dispositif de communication conçu pour échanger des données de manière bidirectionnelle avec une unité de commande (104) du véhicule d'entraînement (102),
dans lequel les instructions de direction destinées au véhicule d'entraînement (102) et générées par le dispositif de génération de signal (26) peuvent être transmises au véhicule d'entraînement (102) par l'intermédiaire du dispositif de communication.

3. Outil agricole (10) selon la revendication 1 ou 2,
**caractérisé par** plusieurs outils de travail du sol (14a à 14m) espacés les uns des autres transversalement par rapport au sens de marche (F),
dans lequel le dispositif de génération de signal (26) est conçu pour générer les instructions de direction destinées au véhicule d'entraînement (102) afin de corriger les positions relatives entre les rangs de plantes (202a à 202l) et les outils de travail du sol (14a à 14m).

4. Outil agricole (10) selon l'une quelconque des revendications précédentes, **caractérisé par** plusieurs éléments d'application espacés les uns des autres transversalement par rapport au sens de marche (F), dans lequel le dispositif de génération de signal (26) est conçu pour générer les ordres de direction pour le véhicule d'entraînement (102) afin de corriger les positions relatives entre les rangs de plantes (202a à 202l) et les éléments d'application.

5. Outil agricole (10) selon l'une quelconque des revendications précédentes, **caractérisé en ce que** le dispositif de génération de signal (26) est conçu pour générer des instructions de réglage de vitesse destinées au véhicule d'entraînement (102).

6. Outil agricole (10) selon la revendication 5,
**caractérisé en ce que** le dispositif de génération de signal (26) est conçu pour générer des instructions de réglage de vitesse destinées au véhicule d'entraînement (102) en fonction des positions et/ou des tracés de rangs de plantes (202a à 202l) détecté(e)s par le dispositif de détection de rangs (20).

7. Outil agricole (10) selon la revendication 5 ou 6,
**caractérisé par** un dispositif d'évaluation conçu pour évaluer le résultat du traitement des cultures en rangs au cours d'une action de traitement en ce qui concerne au moins un critère de traitement dépendant de la vitesse de déplacement,
dans lequel le dispositif de génération de signal (26) est conçu pour générer des instructions de réglage de vitesse destinées au véhicule d'entraînement (102) en fonction du résultat, évalué par le dispositif d'évaluation, du traitement des cultures en rangs.

8. Outil agricole (10) selon l'une quelconque des revendications précédentes, **caractérisé par** un capteur de vitesse de rotation conçu pour détecter un changement d'orientation de l'outil (10) par rapport à la direction longitudinale des rangs de plantes (202a à 202l),
dans lequel le dispositif de détection de rangs (20) est conçu pour détecter les positions et/ou les tracés des rangs de plantes (202a à 202l) sur la surface agricole utile (200) en tenant compte de la modification de l'orientation de l'outil (10) détectée par le capteur de vitesse de rotation.

9. Outil agricole (10) selon l'une quelconque des revendications précédentes, **caractérisé par** un capteur d'inclinaison conçu pour détecter une inclinaison de l'outil (10) par rapport à un plan horizontal, au sol de la surface agricole utile (200), à une canopée et/ou à un bord supérieur du stock,
**caractérisé en ce que** le dispositif de génération de signal (26) est conçu pour générer les instructions de direction destinées au véhicule d'entraînement (102) également en fonction de l'inclinaison de l'outil (10) détectée par le capteur d'inclinaison.

10. Outil agricole (10) selon l'une quelconque des revendications précédentes, **caractérisé en ce que** le dispositif de détection de rangs (20) présente une ou plusieurs caméra(s) (22), un ou plusieurs capteur(s) et/ou un ou plusieurs palpeur(s) permettant la détection de rangs.

11. Groupe de machines agricoles (100), comprenant
- un outil agricole (10) ; et
- un véhicule d'entraînement (102) sur lequel est monté l'outil (10) ;
**caractérisé en ce que** l'outil agricole (10) est conçu selon l'une quelconque des revendications précédentes et le véhicule d'entraînement (102) est conçu pour mettre en oeuvre de manière automatique une action de direction en se basant sur les instructions de direction de l'outil (10).

12. Procédé de traitement de cultures en série au moyen d'un groupe de machines agricoles (100) selon la revendication 11, comprenant l'étape consistant à :
- détecter des positions et/ou des tracés de rangs de plantes (202a à 202l) sur une surface agricole utile (200) au cours d'une action de traitement au moyen d'un dispositif de détection de rangs (20) d'un outil agricole (10) du groupe de machines agricoles (100) ;
**caractérisé par** les étapes consistant à :
- générer des instructions de direction destinées à un véhicule d'entraînement (102) du groupe de machines (100) sur lequel est monté l'outil (10) en fonction des positions et/ou des tracés de rangs de plantes (202a à 202l) détecté(e)s par le dispositif de détection de rangs (20) au moyen d'un dispositif de génération de signal (26) de l'outil (10) ;
- transmettre les instructions de direction générées par le dispositif de génération de signal (26) à une unité de commande (104) du véhicule d'entraînement (102) ; et
- mettre en oeuvre de manière automatique une action de direction par le véhicule d'entraînement (102) en se basant sur les instructions de direction transmises de l'outil (10).

13. Procédé selon la revendication 12,
**caractérisé par** l'étape consistant à :
- générer des instructions de réglage de vitesse destinées au véhicule d'entraînement (102) au moyen du dispositif de génération de signal (26) de l'outil (10) ;
dans lequel la génération des instructions de réglage de vitesse intervient de manière préférée en fonction des positions et/ou des tracés des rangs de plantes (202a à 202l) détecté(e)s par le dispositif de détection de rangs (20).

14. Procédé selon la revendication 13,
**caractérisé par** l'étape consistant à :
- évaluer, au moyen d'un dispositif d'évaluation de l'outil (10), le résultat du traitement des cultures en rangs au cours d'une action de traitement en ce qui concerne au moins un critère de traitement dépendant de la vitesse de déplacement ;
dans lequel la génération des instructions de réglage de vitesse destinées au véhicule d'entraînement (102) intervient de manière préférée en fonction du résultat, évalué par le dispositif d'évaluation, du traitement des cultures en rangs.

15. Procédé selon l'une quelconque des revendications 12 à 14,
**caractérisé par** l'étape consistant à :
- détecter un changement d'orientation de l'outil (10) par rapport à la direction longitudinale des rangs de plantes (202a à 202l) au moyen d'un capteur de vitesse de rotation de l'outil (10),
dans lequel la détection des positions et/ou des tracés des rangs de plantes (202a à 202l) sur la surface agricole utile (200) intervient en tenant compte du changement d'orientation de l'outil (10) détecté par le capteur de vitesse de rotation.
